# EUROPEAN PATENT APPLICATION

(11) **EP 4 258 714 A1**
(43) Date of publication of application: **11.10.2023**
(21) Application number: 22305452.9
(22) Date of filing: 05.04.2022
(51) Int. Cl.: H04W 8/18, H04W 48/18

(54) **A SECURE ELEMENT APPLICATION FOR TRIGGERING A MOBILE EQUIPMENT TO PERFORM PREFERRED NETWORK SELECTION PROCEDURE TO ATTACH TO A PRIVATE NETWORK AND CORRESPONDING SECURE ELEMENT**

(71) Applicant: Thales Dis France SAS, 92190 Meudon (FR)
(72) Inventor: PHAN, Ly-Thanh, 92350 LE PLESSY- ROBINSON (FR); VOYER, Jerome, 13390 AURIOL (FR); DANY, Vincent, 13400 AUBAGNE (FR)
(74) Representative: Scheer, Luc

(57) **Abstract**

The invention concerns a secure element application for triggering a mobile equipment to perform preferred network selection procedure to attach to a private network after an optimum period of time and after at least a specific location change, the optimum period of time and the specific location changes being learnt from a continuous learning phase, the application comprising instructions for, during the continuous learning phase:
- attempting to attach to the private network though successive trials of:
- known methods to trigger the mobile equipment to perform network selection, or
- trigger the mobile equipment to perform network selection at known locations where the private network is expected to become available , or
- varying the time and frequency to trigger the mobile equipment to perform network selection after a given location change,
the optimum period of time being derived from previously recorded time periods, measured from the location change event until a successful switch to the private network.

## Description

The invention concerns telecommunications and more precisely secure elements like UICCs (Universal Integrated Circuit Cards) like SIM cards, USIMs, eUICCs (embedded UICCs) or iUICCs (integrated UICCs). These secure elements cooperates with terminals (UE for User Equipment) like smartphones, mobile phones, PDAs or loT devices for example. These terminals are hereafter also called devices.

The secure elements have the purpose to establish and secure communications between the terminals and telecommunication networks.

There are two major kinds of telecommunication networks: Public and private. Public telecommunication networks are also called PLMNs (Public Land Mobile Networks). A PLMN can be a Home PLMN (HPLMN) or a visited PLMN (VPLMN).

In schools, airports, big factories, energy utilities, manufacturing sites, ports or offshore platforms for example, private cellular network can be installed in order to restrict the access to these networks to given and identified users of terminals that are covered by these private cellular networks.

The purpose of the invention is to switch from a globally accessible Public Network to a locally accessible Private Network. This switch is initiated by the secure element as soon as it detects the presence of the private network (the terminal with which it cooperates is covered by the private network. This switch is notably realized in order to minimize communication costs, tackle security risks and narrow the attack surface.

Private network is used in this document is also known as Non-Public Network (or NPN in 3GPP specifications) or is also called Mobile Private Network.

3GPP does not allow a search for higher priority PLMN when the UE is camping on a HPLMN or EHPLMN (Equivalent Home PLMN).

Existing solutions for switching from a globally accessible public network to a local private network either rely on:
- Setting the global public network as a visited PLMN (VPLMN) with the related issues e.g. on user experience or due to user preference to limit data access when in roaming, and by default mobile terminals are setup to prevent data usage when in roaming;
- Using the SIM Toolkit location status event sent by the ME to the USIM, but such method is not optimum when the Private Network is not immediately available after such an event;
- Support by the ME of a specific method for the USIM to force the ME to perform Network Selection procedure.

These existing methods have however an impact either on the battery usage or on the User Experience e.g. long delay before switching to the private network or frequent period of UE reinitialization (unavailable for normal use).

So, the technical problem the invention intends to solve is: How to force automatically the ME to switch from a globally accessible Public Network to a local Private Network, as soon as possible, without modification of the ME, and with lowest impact on battery consumption and usability.

This is achieved thanks to a method including the steps of:
- Choosing the method that is supported by the ME, to induce the ME to perform network selection;
- Determining the earliest time the ME should perform the network selection procedure;
- Minimizing service interruption due to the switching procedure in order to optimize battery consumption.

More precisely, the invention proposes a secure element application for triggering a mobile equipment to perform preferred network selection procedure to attach to a private network after an optimum period of time and after at least a specific location change, the optimum period of time and the specific location changes being learnt from a continuous learning phase, the application comprising instructions for, during the continuous learning phase:
- attempting to attach to the private network though successive trials of:
   - known methods to trigger the mobile equipment to perform network selection, or
   - trigger the mobile equipment to perform network selection at known locations where the private network is expected to become available , or
   - varying the time and frequency to trigger the mobile equipment to perform network selection after a given location change,
   the optimum period of time being derived from previously recorded time periods, measured from the location change event until a successful switch to the private network.

Preferably, the known methods to trigger preferred network selection procedure include:
- Modifying the IMSI of the secure element, or
- Clearing the LOCI file of the secure element, or
- Perform a Steering of Roaming Refresh, or
- Indicating to the mobile equipment via an AT command to go to idle mode, or
- any combination of these above methods.

Advantageously, the know locations are:
- pre-configured in the secure element application, or
- configured in the secure element application by a remote server, or
- learnt via successive trials of various locations, or
- based on network rejection event.

Preferably, the varying frequency to trigger the mobile equipment to perform network selection consists in triggering to lower frequency, to obtain the best trade-off between battery consumption and time to switch to the private network.

The invention also concerns a secure element comprising such an application.

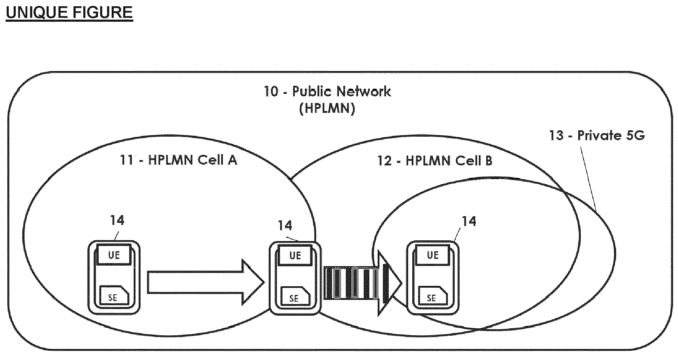

The invention will be better understood by reading the following description of a preferred embodiment of the invention, in regard of the unique figure that represents a UE (composed of a ME part and a SE/USIM part) moving from a first HPLMN cell to second one, at least a part of a private network being in the coverage of a second HPLMN cell.

The unique figure represents a public network 10 (here a HPLMN but it could also be a VPLMN for example or an EHPLMN).

The HPLMN 10 comprises two HPLMN cells, a first HPLMN cell A referenced 11 and a second HPLMN cell B referenced 12. The coverage of the HPLMN cell 12 covers at least a part of the coverage of a private 5G (or 4G/3G/2G, WLAN or wireless network in general) private network 13.

A UE 14 constituted by a ME and a secure element SE (e.g. USIM) is in a first step covered by cell 11 and is moving in direction of cells 12 and 13.

In a second step, the UE 14 reaches the edge of cell A and cell B of the HPLMN and camps on cell B.

The UE 14, that was requested by the SE to send an event on location change, sends a location change event to the SE.

The SE determines (e.g. by searching a locally stored look-up table) that the private 5G network 13 is close to cell B (i.e. there is a high probability for a network selection procedure attempt by the ME of the private network will be successful), but does not know yet exactly when to switch to the private 5G network.

The SE, when the UE 14 enters in the coverage of cell B 12, starts a timer T and attempts at varying frequency to switch and connect to the private 5G network 13.

When the private 5G network is reached (i.e. the UE 14 is under the radio coverage of the private network), in a third step, the attempt of the SE to switch to the private 5G is successful, and the UE 14 is able to connect to the private 5G network 13.

The USIM then stops the timer T, stops the switching attempts process and saves a value TO of timer T. The value TO thus corresponds to the duration (time period) that the ME needed from entering in cell B 12 to reach in cell 13.

The next time the SE receives, from the ME, the event indicating it has reached cell B 12, the SE starts again the timer T (after a reset), and waits for timer T to reach a value T0* derived from TO to start the switching attempts process.

When the UE 14 is able to connect to the private 5G network 13, the UE 14 stops the switching procedure and saves a new value T1 of Timer T.

The next time the UE 14 reaches cell B, the SE derives a new value T1* from T0, T0* and T1. After several epochs of the above learning process, the SE is able to estimate one value or multiple values of the timer T, for which the private 5G network can be accessible at a probability higher than a set fixed threshold.

Consequently, the SE is able to reduce the time and frequency of switching attempt procedure, and this reduces the battery consumption of the UE due to switching attempts.

About the learning algorithm, two alternatives are possible: One based on a neural network model (for example LSTM - Long short-term memory) and the second more traditional algorithm based on a triplet of parameters that are adjusted programmatically.

These algorithms are described below.

The neural network (for example LSTM) based algorithm can be used for improving the prediction of the Time of Arrival (ToA).

ToA is the time period between the moment a target cell (i.e. the cell where there is a high probability for the UE 14 to under the coverage of the private network) has been reached and the moment the MPN (Mobile Private Network) is successfully selected.

Radio cells are identified by their cell identifiers that are broadcast over the radio interface by the radio based stations. The Target cell is identified in particular by its target Cell-ID. The applet may know about the target Cell-ID of a target cell either by pre-configuration e.g. by the Home PLMN or by the Private Network operator or after a phase of trials and errors.

The invention uses a reinforcement learning algorithm in order to improve a machine learning model (called MODEL) (e.g. based on one LSTM or multiple layers of LSTMs neural networks). The input of the MODEL includes the sequence of Cell-IDs received by the applet from the successive location-update events until a location-update event contains a target Cell-ID indicating that this target-Cell-ld is reached.

The output of the MODEL is the ToA.

During the reinforcement learning phase:
- the MODEL is provided with the successively received list of Cell-IDs as inputs,
- a predicted Time of Arrival (pToA) is generated by the MODEL for each input,
- the error (Err = pToA - gtToA) is calculated between
   ∘ the predicted Time of Arrival (pToA) and
   ∘ the ground truth Time of Arrival measured by the Applet (gtToA)
- the calculated error (Err) is back-propagated in the learning MODEL in order to adjust the MODEL internal parameters, until the MODEL is able to provide an aggregated Err (e.g. Mean of Squared Root of Sum of Squared Errors for a validation batch of data) that is below a defined threshold.

The training application records the sequences of Cell-IDs for the reinforcement training of the Model.

The sequence of Cell-IDs recorded by the training application is the N last Cell-IDs before a target cell is reached and include the Target Cell ID.

The training application also records the corresponding ground truth gtToA associated to the sequence of Cell-IDs.

The learning algorithm based on the triplet to minimize the time to select successfully the private network and minimize the number of selection attempts may consist, when a target cell has been reached, in:
- The applet performing a first attempt to select the private network after a long time period of value TL (e.g. 10 minutes)
- If the private network could not be selected during this first attempt then:
   ∘ the applet performs the following attempts after a shorter time period of value TS (e.g. 1 minute)
   ∘ until the MVP is selected
- If the private network could be selected during said first attempt when TL expired, then TL is decreased by a number Nd times TS (new_TL = old_TL - Nd x TS), and this new value is used for the next time the device reaches a target cell, coming from a public mobile network;
- If the private network could not be selected at expiration of the long time period TL and is successfully selected after N times the expiration of TS,
   ∘ If N is greater than Nd then TL increased by (N-Nd) times TS (new_TL = old_TL + (N-Nd) x TS)
   ∘ if N is less or equal to Nd then TL is unchanged

Therefore, Nd is used to reduce the long time period TL in order to have the opportunity to select the private network at an earlier time when a target cell is reached.

A triplet value (TL, TS, Nd) may be associated to each or a group of target cells of a target cell list.

So, the invention proposes to use a secure element application for triggering a mobile equipment to perform preferred network selection procedure to attach to a private network after an optimum period of time and after at least a specific location change, the optimum period of time and the specific location changes being learnt from a continuous learning phase (the application works permanently), the application comprising instructions for, during this continuous learning phase:
- attempting to attach to the private network though successive trials of:
   - known methods to trigger the mobile equipment to perform network selection, or
   - trigger the mobile equipment to perform network selection at known locations where the private network is expected to become available , or
   - varying the time and frequency to trigger the mobile equipment to perform network selection after a given location change,
the optimum period of time being derived from previously recorded time periods, measured from the location change event until a successful switch to the private network.

The optimum period of time is derived from previously recorded time periods, measured from the location change event where the private network is expected to be available until a successful switch from the HPLMN to the private network.

The known methods to trigger preferred network selection procedure include but not restricted to the following methods:
- Modifying the IMSI of the USIM (this is the slowest method)
- Clearing the LOCI file of the USIM
- Perform a Steering of Roaming Refresh
- Indicating the ME via an AT command to go to idle mode
- And a combination of these above methods

The target locations known by the application are for instance:
- Either pre-configured in the UICC applications
- Or configured in the UICC application by a remote server
- Or learnt via successive trials of various locations
- Or based on network rejection event

The varying frequency to trigger the mobile equipment to perform network selection consists in triggering to lower frequency, to obtain the best trade-off between battery consumption and time to switch to the private network.

The invention also concerns a secure element comprising such an application.

The main advantages brought by the invention include:
- Seamless switching: There is no user intervention;
- Minimize switching delay when the private network becomes available;
- Allows the terminal to spend the maximum of time on the private network;
- Minimize battery consumption thanks to optimum timing from the change of location (edge of the public network where the private network is expected).

There are two use cases for the invention:
- Use case 1: In combination of existing solution, the SE will learn when to switch to the private network;
- Use case 2: In a "standalone mode" the SE is configured (by MNO) with the Cell B identity where the private network is located, then the learning starts when the terminal enters the coverage of Cell B.

In summary, the invention relies on actual trials of what feature is supported by the actual terminal to select the most time efficient procedure to perform the network selection procedure, and which may change over time depending on the environment e.g. radio coverage changes, obstructions. It also relies on actual trials to predict when to perform the switching based on the location and trajectory of the devices when previous method only relies on the change of location. Finally, the parameters learnt on one or several devices presenting the same usage profile could be shared with other devices presenting the same usage profile.

## Claims

1. A secure element application for triggering a mobile equipment to perform preferred network selection procedure to attach to a private network after an optimum period of time and after at least a specific location change, said optimum period of time and said specific location changes being learnt from a continuous learning phase, said application comprising instructions for, during said continuous learning phase:
- attempting to attach to said private network though successive trials of:
- known methods to trigger said mobile equipment to perform network selection, or
- trigger said mobile equipment to perform network selection at known locations where said private network is expected to become available , or
- varying the time and frequency to trigger said mobile equipment to perform network selection after a given location change,
said optimum period of time being derived from previously recorded time periods, measured from the location change event until a successful switch to said private network.

2. A secure element application according to claim 1, wherein said known methods to trigger preferred network selection procedure include:
- Modifying the IMSI of said secure element, or
- Clearing the LOCI file of said secure element, or
- Perform a Steering of Roaming Refresh, or
- Indicating to said mobile equipment via an AT command to go to idle mode, or
- any combination of these above methods.

3. A secure element application according to claims 1 or 2, wherein said know locations are:
- pre-configured in said secure element application, or
- configured in said secure element application by a remote server, or
- learnt via successive trials of various locations, or
- based on network rejection event.

4. A secure element application according to any of the claims 1 to 3, wherein said varying frequency to trigger said mobile equipment to perform network selection consists in triggering to lower frequency, to obtain the best trade-off between battery consumption and time to switch to said private network.

5. A secure element comprising an application according to any of the claims 1 to 4.
